(19) Europäisches Patentamt / European Patent Office / Office européen des brevets

(11) **EP 3 163 484 B1**

(12) **FASCICULE DE BREVET EUROPEEN**

(45) Date de publication et mention
de la délivrance du brevet:
**27.11.2019 Bulletin 2019/48**

(51) Int Cl.:
*G06K 9/52* (2006.01)   *G06F 21/32* (2013.01)
*G06K 9/00* (2006.01)   *H04L 29/06* (2006.01)
*H04W 12/06* (2009.01)   *G06F 16/583* (2019.01)

(21) Numéro de dépôt: **16195615.6**

(22) Date de dépôt: **25.10.2016**

(54) **PROCEDE DE DETECTION DE LA PROJECTION D'IMAGE ENREGISTREE POUR FRAUDER UNE AUTHENTIFICATION BIOMETRIQUE**

VERFAHREN ZUM AUFDECKEN EINES DURCH AUFGEZEICHNETE BILDPROJEKTION BETRUGS IM BIOMETRISCHE AUTHENTIFIZIERUNG

METHOD FOR RECORDED IMAGE PROJECTION FRAUD DETECTION IN BIOMETRIC AUTHENTICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2015 FR 1560250**

(43) Date de publication de la demande:
**03.05.2017 Bulletin 2017/18**

(73) Titulaire: **Idemia Identity & Security France
92400 Courbevoie (FR)**

(72) Inventeur: **BEAUDET, Jean
92130 Issy les Moulineaux (FR)**

(74) Mandataire: **Regimbeau
20, rue de Chazelles
75847 Paris Cedex 17 (FR)**

(56) Documents cités:
**US-A1- 2014 289 834     US-A1- 2014 333 414**

• **KIM SOOYEON ET AL: "Face liveness detection using variable focusing", 2013 INTERNATIONAL CONFERENCE ON BIOMETRICS (ICB), IEEE, 4 juin 2013 (2013-06-04), pages 1-6, XP032491243, DOI: 10.1109/ICB.2013.6613002**
• **ALLAN DA SILVA PINTO ET AL: "Video-Based Face Spoofing Detection through Visual Rhythm Analysis", GRAPHICS, PATTERNS AND IMAGES (SIBGRAPI), 2012 25TH SIBGRAPI CONFERENCE ON, IEEE, 22 août 2012 (2012-08-22), pages 221-228, XP032283150, DOI: 10.1109/SIBGRAPI.2012.38 ISBN: 978-1-4673-2802-9**
• **GALBALLY JAVIER ET AL: "Biometric Antispoofing Methods: A Survey in Face Recognition", IEEE ACCESS, vol. 2, 18 décembre 2014 (2014-12-18), pages 1530-1552, XP011569309, DOI: 10.1109/ACCESS.2014.2381273**

## Description

DOMAINE DE L'INVENTION

L'invention concerne un procédé de détection de fraude lors d'une authentification biométrique, et un système pour la mise en oeuvre de ce procédé. L'invention s'applique notamment à l'authentification d'individus auprès d'un dispositif électronique personnel tel que téléphone mobile ou tablette, par comparaison d'images du visage de l'individu.

ETAT DE LA TECHNIQUE

De plus en plus de dispositifs électroniques personnels de type téléphone mobile ou tablette numérique, qui sont pourvus d'une caméra numérique, comprennent une fonctionnalité d'authentification biométrique de l'individu pour accéder aux autres fonctions du dispositif.

Cette authentification biométrique comprend typiquement l'acquisition d'une image ou d'une séquence vidéo du visage d'un individu, et la comparaison de caractéristiques (ou templates) biométriques extraites de cette image ou séquence à des caractéristiques biométriques extraites d'une image ou séquence acquise préalablement et stockée dans la mémoire du dispositif. En cas de correspondance, l'accès à certaines fonctions du dispositif est autorisé.

Ces dispositifs peuvent être exposés à des fraudes dites « par re-projection », qui consistent à présenter à la caméra, lors de l'acquisition d'une image ou d'une séquence vidéo de l'individu candidat, une image ou une vidéo préenregistrée de l'individu autorisé, et reproduite sur un écran, par exemple un autre téléphone ou une autre tablette numérique.

Ceci permet bien entendu d'usurper l'identité de l'individu autorisé pour pouvoir accéder aux fonctions du dispositif électronique.

L'article de W. Wang et H. Farid, Detecting Re-Projected Video, décrit la détection d'une double projection d'une vidéo, c'est-à-dire l'acquisition, par une caméra, d'un enregistrement vidéo d'une séquence d'images projetée sur un écran, puis la projection d'un écran de cet enregistrement vidéo. Le principe est de détecter une distorsion de l'image (également appelé skew) finale projetée sur l'écran, en supposant que la caméra ayant procédé à la première acquisition de la séquence d'images n'engendrait aucune distorsion, et que celle ayant réalisé l'enregistrement sur l'écran de cette séquence d'images est positionnée de biais par rapport à l'écran.

Cette méthode ne fonctionne donc que dans des applications assez limitées, et notamment trouve ses limites dans le cas où la réacquisition de la séquence d'images projetées est fronto-parallèle, c'est-à-dire dans le cas où le capteur de la caméra qui enregistre la séquence d'images diffusée sur l'écran s'étend parallèlement à l'écran, ce qui est le cas le plus naturel. L'article d'ALLAN DA SILVA PINTO ET AL: "Video-Based Face Spoofing Détection through Visual Rhythm Analysis", GRAPHICS, PATTERNS AND IMAGES (SIBGRAPI), 2012 25TH SIBGRAPI CONFERENCE ON, IEEE, 22 août 2012 (2012-08-22), pages 221-228, XP032283150, DOI: 10.1109/SIBGRAPI.2012.38ISBN: 978-1-4673-2802-9 décrit l'étude du bruit généré par la re-capture de vidéos d'authentification, le bruit enregistré étant la somme du bruit généré par le capteur enregistrant la vidéo originale et de l'écran rejouant cette vidéo. Dans le cadre de cette étude, des expériences sont conduites, avec des moniteurs différents pour rejouer la vidéo.

Le brevet US 2014/289834 A1 (LINDEMANN ROLF [DE]) 25 septembre 2014 (2014-09-25) mentionne la publication ci-dessus et ajoute un test de réaction de l'utilisateur, consistant a s'assurer du mouvement des yeux de l'utilisateur lorsque des images ou un texte sont présentés.

Le mouvement des différentes parties de l'image est étudié pour s'assurer de ne pas être en présence d'une image en deux dimensions.

Le brevet US 2014/333414 A1 (KURSUN EREN [US]) 13 novembre 2014 (2014-11-13) divulgue la création de profiles d'acquisition d'image et la vérification de l'appartenance des images acquises à l'un de ces profiles. Lors de l'authentification d'utilisateurs, le type d'appareil utilisé, ainsi que la résolution de l'image sont vérifiés comme correspondant au profil utilisé pour l'enregistrement initial.

PRESENTATION DE L'INVENTION

L'invention a pour but de pallier au moins en partie les inconvénients de l'art antérieur. L'invention est définie par les revendications indépendantes. Les revendications dépendantes définissent des modes particuliers de réalisation.

En particulier, un but de l'invention est de proposer un procédé de détection de fraude par re-projection d'une séquence vidéo, le procédé étant fonctionnel même en l'absence de distorsion de l'image finale.

A cet égard, l'invention a pour objet un procédé de détection de fraude lors d'une authentification biométrique d'un individu comprenant l'acquisition, par un dispositif optique, d'une séquence d'images candidates comprenant au moins deux images candidates d'un individu, en vue de comparer ladite séquence avec une séquence d'image de référence comprenant au moins deux images de références d'un individu acquise lors d'une étape d'enrôlement préalable par le même dispositif optique, le procédé comprenant les étapes consistant à :

- estimer, à partir de la séquence d'images candidates, les paramètres géométriques du dispositif optique ayant acquis ladite séquence d'images candidates sur l'individu, et
- comparer lesdits paramètres géométriques avec les paramètres géométriques du dispositif optique ayant acquis la séquence d'image de référence, et

- à partir du résultat de la comparaison, déterminer si la séquence d'image de vérification a été acquise à partir d'au moins une image pré-enregistrée de l'individu.

Avantageusement, mais facultativement, le procédé selon de détection de fraude peut en outre comprendre au moins l'une des caractéristiques suivantes :

- si les paramètres géométriques estimés sont différents des paramètres géométriques du dispositif optique ayant acquis la séquence d'image de référence, la séquence d'image candidate est considérée comme ayant été acquise à partir d'une image pré-enregistrée, et le procédé comprend une étape de détection de fraude.
- le dispositif optique comprend un capteur et une optique, et les paramètres géométriques d'un dispositif optique comprennent la distance focale de l'optique, la taille des pixels du capteur, et la position de la projection du centre de l'optique sur le capteur.
- chaque séquence d'image est une vidéo comprenant une pluralité d'images, et les images d'une même séquence sont acquises pour différentes positions relatives de l'individu par rapport au dispositif optique.
- Le procédé peut en outre comprendre l'estimation, à partir de la séquence d'image candidate, d'un paramètre égal au ratio entre la distance focale du dispositif optique ayant acquis ladite séquence et la taille des pixels du capteur dudit dispositif optique, et la comparaison dudit paramètre avec le paramètre correspondant du dispositif optique ayant acquis la séquence d'image de référence.

Selon un mode de réalisation, l'invention concerne également un système de détection de fraude comprenant un dispositif optique d'acquisition d'images et une unité de traitement comprenant un processeur et une mémoire, le système étant caractérisé en ce qu'il est adapté pour mettre en oeuvre le procédé de détection de fraude selon la description qui précède.

Avantageusement, mais facultativement, le système selon l'invention peut être un dispositif électronique personnel de type ordinateur personnel, téléphone mobile ou tablette numérique.

Selon un autre mode de réalisation, l'invention concerne un produit programme d'ordinateur, comprenant des instructions de code pour l'exécution d'un procédé comprenant des étapes consistant à :

- estimer, à partir d'une première séquence d'images, les paramètres géométriques du dispositif optique ayant acquis ladite séquence d'images, et
- comparer lesdits paramètres géométriques avec des paramètres géométriques de référence,

lorsqu'il est mis en oeuvre par un processeur.

Selon un autre mode de réalisation, l'invention a pour objet un procédé d'authentification biométrique d'un individu, comprenant :

- un enrôlement d'un individu par acquisition, au moyen d'un dispositif optique, d'une séquence d'image de référence de l'individu comprenant au moins une image de l'individu, et
- une vérification de l'identité d'un individu candidat, ladite vérification comprenant l'acquisition, au moyen du même dispositif optique que celui utilisé lors de l'enrôlement, d'une séquence d'images candidates d'un individu comprenant au moins deux images de l'individu,

le procédé d'authentification étant caractérisé en ce qu'il comprend en outre, après l'étape d'acquisition de la séquence d'image candidate, la mise en oeuvre du procédé de détection de fraude selon la description qui précède.

Le procédé de détection de fraude selon l'invention permet de détecter une fraude en comparant les paramètres géométriques de la caméra ayant procédé à l'acquisition pour l'enrôlement de l'individu avec celle de la caméra ayant procédé à la vérification, ces deux caméras étant supposées identiques dans le cadre des applications visées.

Ainsi en l'absence de fraude, les caméras étant identiques, leurs paramètres géométriques sont également identiques.

En revanche, en cas de fraude par re-projection d'images, la caméra utilisée pendant la vérification acquiert une séquence d'images préalablement enregistrées et projetées sur un écran. Cette séquence d'enregistrement - projection - réenregistrement implique que les paramètres géométriques estimés d'une caméra équivalent acquérant directement l'image de l'individu diffèrent des paramètres de la caméra effectivement utilisés.

DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- La figure 1 représente les principales étapes d'un procédé d'authentification biométrique d'un individu comprenant la mise en oeuvre d'un procédé de détection de fraude selon un mode de mise en oeuvre de l'invention.
- La figure 2 représente schématiquement un système adapté pour la mise en œuvre du procédé.
- La figure 3 représente des conventions de notation utilisées concernant les paramètres des caméras.
- Les figures 4a et 4b représentent respectivement, de façon schématique, l'acquisition d'une séquence d'image candidate en l'absence de fraude et en cas de fraude.

## DESCRIPTION DETAILLEE D'AU MOINS UN MODE DE MISE EN ŒUVRE DE L'INVENTION

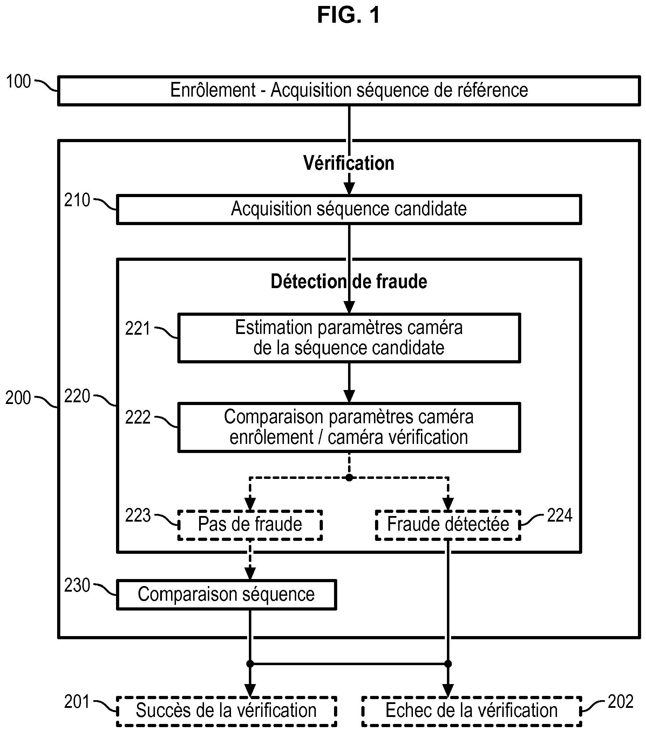

En référence à la figure 1, on a représenté les principales étapes d'un procédé d'authentification biométrique d'un individu. Une authentification biométrique est la vérification de l'identité d'un individu candidat par comparaison de traits biométriques de référence d'un individu identifié avec des traits biométriques acquis sur l'individu candidat.

Ce procédé d'authentification est avantageusement mis en oeuvre par un dispositif électronique personnel à un individu, par exemple un ordinateur, un téléphone mobile, une tablette numérique, etc. Le procédé d'authentification permet typiquement de n'autoriser l'accès à certaines fonctionnalités du dispositif électronique qu'à l'individu de référence à qui appartient le dispositif électronique.

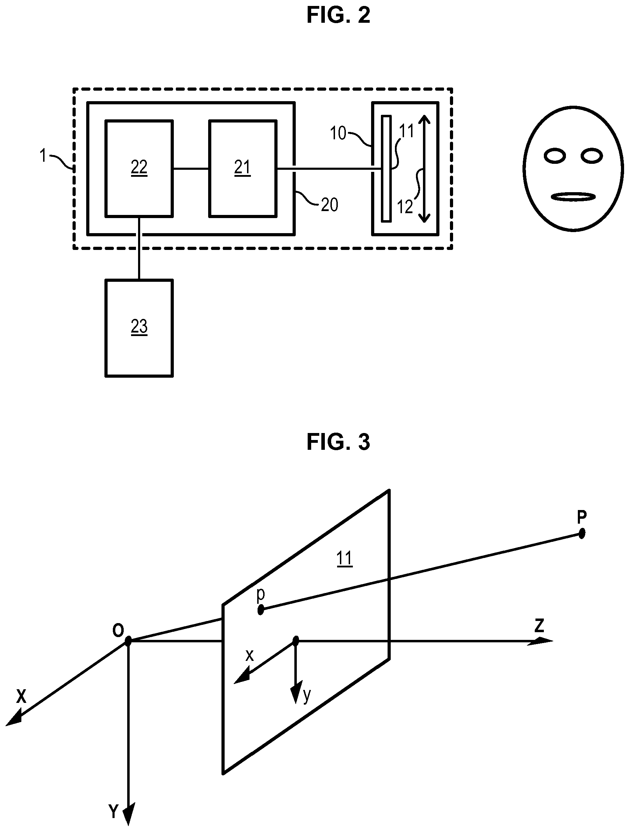

Sur la figure 2, on a représenté schématiquement un tel dispositif électronique 1. Il comprend un dispositif optique 10 d'acquisition d'images, tel que par exemple une caméra numérique ou un appareil photographique numérique. Ce dispositif optique 10 comprend schématiquement un capteur 11, par exemple de type CCD ou CMOS. Ce capteur comprend une pluralité de pixels photosensibles. Le dispositif optique 10 comprend en outre une optique 12, c'est-à-dire un ensemble de lentilles, et/ou miroir, positionnée entre le capteur et l'objet dont on acquiert une image.

Le dispositif électronique 1 comprend en outre une unité de traitement 20 connectée au dispositif optique 10. Cette unité de traitement comprend un processeur 21 et une mémoire 22.

Typiquement, l'unité de traitement est adaptée pour commander le capteur et apporter des traitements ou corrections logiciels aux images acquises par le capteur. L'unité de traitement est également adaptée pour traiter les images acquises afin de mettre en oeuvre le procédé d'authentification et de détection de fraude décrit ci-après, par exemple par l'exécution, par le processeur, d'instructions de code dédiées.

Le système 1 comprend avantageusement un dispositif d'alerte 23 commandé par l'unité de traitement 20, et adapté pour émettre un signal sonore ou pour afficher sur un écran un message d'erreur en cas de détection de fraude par l'unité de traitement.

### *Procédé d'authentification biométrique*

De retour à la figure 1, l'authentification biométrique qui est mise en oeuvre est de préférence du type comprenant un enrôlement 100 préalable d'un individu de référence par acquisition d'une séquence d'image dite de référence, comprenant au moins une image de l'individu de référence. De préférence, l'image de l'individu est une image du visage de l'individu.

Cette acquisition est mise en oeuvre par le dispositif optique 10 du dispositif électronique 1.

La séquence d'images de référence est considérée comme une donnée de confiance, c'est-à-dire un enregistrement authentique et direct (sans re-projection) de l'individu de référence.

L'authentification biométrique comprend ensuite une étape de vérification 200 de l'identité d'un individu candidat, pour déterminer si cet individu correspond à l'individu de référence.

Cette étape comprend d'abord l'acquisition 210 d'une séquence d'images dite candidate de l'individu candidat, comprenant au moins deux images de l'individu candidat, chaque image étant de préférence une image du visage de l'individu candidat. Cette étape est mise en oeuvre par le même dispositif optique 10 que celui utilisé pour l'acquisition de la séquence d'image de référence. Comme décrit plus en détails ci-après, les images de la séquence de vérification sont acquises pour des positions relatives différentes de l'individu candidat par rapport au dispositif optique 10.

L'authentification biométrique comprend ensuite une comparaison 230 des images de la séquence de référence et de la séquence candidate, ou plus précisément de caractéristiques biométriques de l'individu figurant sur ces séquences d'images et extraites des images, pour vérifier si l'individu représenté sur les images est le même. Le cas échéant, l'individu candidat est identifié comme l'individu de référence et l'étape de vérification rend un résultat positif 201. Dans le cas contraire, l'authentification échoue et l'étape de vérification rend un résultat négatif 202.

La comparaison de l'individu figurant sur les images est réalisée de manière connue de l'Homme du Métier.

Un exemple de réalisation est par exemple détaillé dans la publication de Turk, M., & Pentland, A. P. (1991, June). Face récognition using eigenfaces. In Computer Vision and Pattern Recognition, 1991. Proceedings CVPR'91., IEEE Computer Society Conference on (pp. 586-591). IEEE.

Dans l'application préférée de l'invention dans laquelle l'authentification est mise en oeuvre auprès d'un dispositif électronique personnel, l'authentification de l'individu candidat permet à ce dernier d'accéder à des fonctions ou des données du dispositif électronique 1.

Afin de protéger ce dispositif contre la fraude, l'étape de vérification 200 comprend de préférence la mise en oeuvre d'un procédé de détection de fraude 220, après l'étape d'acquisition 210 de la séquence d'image candidate, et avant l'étape 230 de comparaison.

De préférence, lorsqu'une fraude a été détectée à l'issue du procédé de détection de fraude 220, l'étape de vérification 200 rend un résultat négatif 202. En d'autres termes, le procédé de vérification aboutit au même résultat que lors d'une comparaison ayant échoué sans détection de fraude, afin d'éviter de renseigner un fraudeur sur la cause de son échec. Le cas échéant, l'étape de comparaison 230 peut même être mise en oeuvre après que la fraude a été détectée pour rendre plus similaires les traitements en l'absence et en cas de fraude.

*Procédé de détection de fraude*

Le procédé de détection de fraude 220 est basé sur le fait que, lorsqu'une caméra acquiert une image de l'image d'un objet projetée sur un écran, les paramètres géométriques d'une caméra équivalente acquérant l'image finale à partir de l'objet sont différents de ceux d'une caméra acquérant une image directement sur l'objet.

En référence à la figure 3, on modélise les dispositifs optiques utilisés lors de l'enrôlement et la vérification comme des caméras à sténopé (ou « pinhole camera model » en anglais).

Le référentiel d'un tel dispositif est un référentiel orthogonal centré sur le centre optique du dispositif, présentant des axes X, Y, coplanaires au capteur et Z orthogonal au plan du capteur. La projection p d'un point P de coordonnées sur le capteur du dispositif optique est fournie par la relation suivante :

$$p = K_{acq}[R\ t]P$$

Où R est une matrice 3*3 de rotation, t est un vecteur 3*1 de translation, [Rt] exprimant la pose de l'objet en trois-dimensions par rapport au dispositif d'acquisition, et $K_{acq}$ est la matrice des propriétés géométriques intrinsèques du dispositif optique ayant réalisé l'acquisition de l'image.

$$K_{acq} = \begin{bmatrix} \alpha & \eta & c_x \\ & \alpha' & c_y \\ & & 1 \end{bmatrix}$$

$\alpha$ et $\alpha'$ correspondent au rapport entre la distance focale $z_0$ du dispositif optique sur la taille des pixels selon respectivement l'axe x et l'axe y. En supposant que la hauteur d'un pixel selon l'axe x est égale à la largeur d'un pixel selon l'axe y on a $\alpha'=\alpha$.

De plus $\eta$ traduit la distorsion de l'image (skew) si les axes du référentiel ne sont pas orthogonaux. Ce n'est pas le cas dans l'hypothèse choisie ci-avant donc on considère $\eta=0$.

Enfin $c_x$ et $c_y$ correspondent respectivement à la position en x et en y de la projection sur le capteur du centre optique O du dispositif. Quand le centre optique est projeté au milieu du capteur on peut simplifier par $c_x=c_y=0$.

Lors de l'étape d'enrôlement 100, en notant $K_0$ la matrice des propriétés géométriques intrinsèques du dispositif optique 20, chaque point d'une image est donc exprimé comme suit :

$$p = K_0[R\ t]P$$

$$K_0 = \begin{bmatrix} \alpha_0 & & c_{0x} \\ & \alpha_0 & c_{0y} \\ & & 1 \end{bmatrix}$$

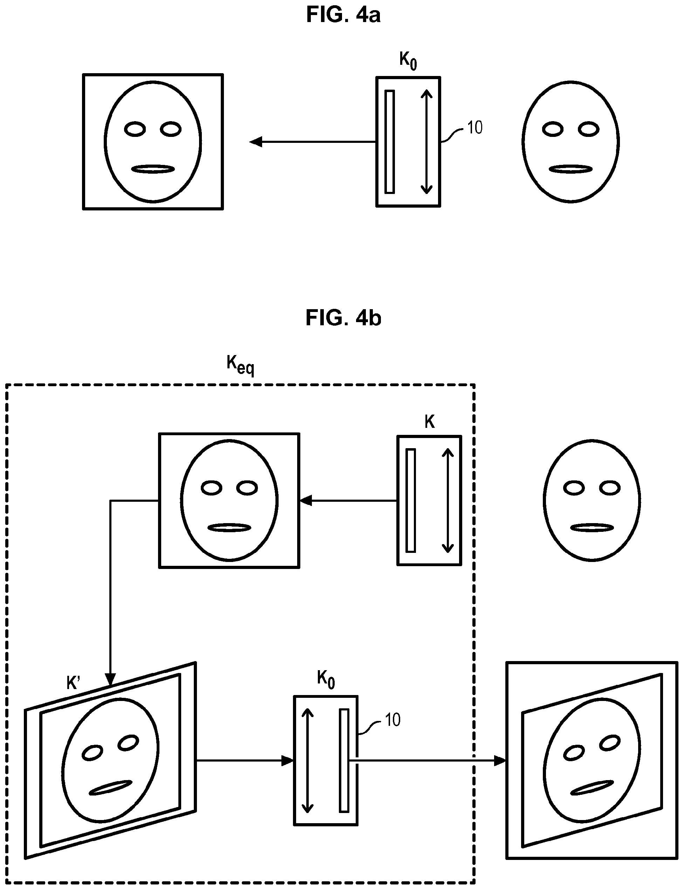

Lors d'une étape d'acquisition d'une séquence d'image candidate 210, représentée schématiquement en figure 4a, si cette acquisition est réalisée avec le même dispositif optique 20, directement sur l'individu candidat, la même relation est applicable.

En revanche, si lors de cette acquisition une image est acquise à partir d'une image projetée sur un écran, cette relation n'est pas applicable.

En effet, en référence à la figure 4b, une première image de l'individu candidat est acquise par un dispositif optique, qui peut ne pas être le même que le dispositif 10 utilisé pour l'enrôlement. On note K la matrice des propriétés géométriques intrinsèques de ce dispositif.

$$K = \begin{bmatrix} \beta & & d_x \\ & \beta & d_y \\ & & 1 \end{bmatrix}$$

La position d'un objet sur l'image obtenue par ce dispositif est :

$$p = K[R\ t]P$$

La diffusion de l'image sur un écran revient à appliquer un changement d'échelle à cette image, de telle sorte que les coordonnées du même point sur l'écran sont données par :

$$p' = \begin{bmatrix} \gamma & & e_x \\ & \gamma & e_y \\ & & 1 \end{bmatrix} K[R\ t]P$$

Où $\gamma$, $e_x$ et $e_y$ représentent le changement d'échelle entre l'image acquise et l'image diffusée sur l'écran.

On note :

$$K' = \begin{bmatrix} \gamma & & e_x \\ & \gamma & e_y \\ & & 1 \end{bmatrix} K$$

Pour obtenir :

$$p' = K'[R\ t]P$$

Lorsqu'enfin l'image diffusée sur l'écran est enregistrée par le dispositif optique 20, l'écran étant supposé fixe par rapport au dispositif, et de position donnée par [R't'] avec R' = [$r_1$'$r_2$'] où r1' et $r_2$' sont des vecteurs 3*1 de rotation, et t' est un vecteur de coordonnées t'$_x$, t'$_y$ et t'$_z$, l'image de l'image représentée sur l'écran par le dispositif optique 10 est donnée par:

$$p'' = K_0[r_1'r_2't']K'[R\ t]P$$

Dans le cas où l'écran est présenté parallèlement au dispositif optique 10, $[r_1'r_2't']$ se résume à :

$$\begin{bmatrix} 1 & & t'_x \\ & 1 & t'_y \\ & & t'_z \end{bmatrix}$$

Si on suppose aussi que les dispositifs optiques utilisés pour les deux acquisitions successives d'images n'ont pas de distorsion et ont des pixels carrés alors on obtient une matrice globale équivalente $K_{eq}$ :

$$p'' = K_{eq}[R\ t]P$$

$$p'' = \begin{bmatrix} \lambda & & f_x \\ & \lambda & f_y \\ & & 1 \end{bmatrix}[R\ t]P$$

Où $\lambda = \alpha_0\beta\gamma/t'_z$ et fx et fy peuvent être exprimés en fonction des paramètres introduits précédemment d'après les équations qui précèdent.

La séquence acquisition - projection - réacquisition est donc assimilable à une acquisition directe d'une image par un dispositif optique dont les paramètres intrinsèques sont la matrice équivalent $K_{eq}$.

Ainsi, de retour à la figure 1, le procédé de détection de fraude 220 comprend une première étape d'estimation 221 de paramètres géométriques du dispositif optique utilisé pour obtenir la séquence d'images candidates. Les paramètres obtenus correspondent, soit :

- en l'absence de fraude, à des paramètres de la matrice $K_0$ du dispositif optique 10 utilisé pour l'acquisition de la séquence d'images candidates 210 lors de la vérification,
- en cas de fraude, à des paramètres d'une matrice $K_{eq}$ d'un dispositif optique équivalent intégrant les changements successifs de paramètres d'un dispositif optique résultant d'une séquence d'acquisition - projection - réacquisition, comme décrit ci-avant.

L'Homme du Métier connaît des méthodes d'estimation de paramètres de caméra à partir d'une ou plusieurs images.

Comme indiqué ci-avant, la séquence d'images candidates comprend une pluralité d'images, et les images de la séquence sont acquises à différentes positions relatives de l'individu par rapport au dispositif optique 10. Ceci est avantageusement obtenu en demandant, lors de l'acquisition de la séquence d'images candidates, à l'individu de bouger par rapport au dispositif optique 10. En cas de fraude, c'est la première acquisition de l'individu candidat, qui est ensuite projetée sur l'écran, qui comprend le déplacement.

L'estimation 221 des paramètres comprend alors l'estimation du paramètre correspondant au rapport entre la distance focale du dispositif optique utilisé sur la taille d'un pixel, qu'on note de façon générale λ, et qui est égal à $\alpha_0$ en l'absence de fraude, et différent de $\alpha_0$ en cas de fraude.

Cette étape est de préférence mise en oeuvre de la façon décrite dans l'article de Li, Hongdong, A simple solution to the Six-point Two-view Focal-length Problem.

Alternativement, l'estimation 221 peut être mise en oeuvre par la technique dite de l'ajustement de faisceaux (connue en anglais sous le nom de bundle adjustment), et décrite dans l'article de Triggs, B., McLauchlan, P. F., Hartley, R. I., & Fitzgibbon, A. W. (2000). Bundle adjustment-a modem synthesis. In Vision algorithms: theory and practice (pp. 298-372). Springer Berlin Heidelberg. Selon cette technique, tous les paramètres de la matrice K de paramètres géométriques intrinsèques peuvent être estimés.

On suppose par ailleurs que les paramètres géométriques intrinsèques $K_0$ du dispositif optique 10 sont connus, ce dispositif étant celui utilisé lors de l'enrôlement pour obtenir, directement à partir de l'individu de référence, une image de celui-ci.

La connaissance des paramètres géométriques du dispositif optique 10 peut provenir, par exemple, de l'estimation de ces paramètres conformément à l'étape 221 lors de l'étape d'enrôlement. Dans ce cas la séquence d'image de référence comprend au moins deux images, sur lesquelles l'individu présente des positions relatives différentes par rapport au dispositif optique. Cette variation de position relative permet d'estimer les paramètres sur les images.

Alternativement, les paramètres géométriques peuvent être connus préalablement à la mise en oeuvre de l'étape d'enrôlement, par exemple par calibration du dispositif optique ou d'un dispositif optique du même modèle. On pourra se référer par exemple à la publication de Tsai, R. Y. (1987). A versatile camera calibration technique for high-accuracy 3D machine vision metrology using off-the-shelf TV cameras and lenses. Robotics and Automation, IEEE Journal of, 3(4), 323-344.))

Le procédé de détection de fraude comprend ensuite la comparaison 222 des paramètres estimés avec ceux du dispositif optique 10.

Cette comparaison est avantageusement calculée à partir du ratio entre le paramètre calculé et le paramètre correspondant du dispositif optique 10, et la comparaison de ce ratio à un seuil, par exemple :

$$\left| \frac{\lambda}{\alpha_0} - 1 \right| \geq \varepsilon$$

En cas de correspondance (dans l'exemple qui précède, si l'équation n'est pas vérifiée), on en déduit au cours d'une étape 223 l'absence de fraude car cela indique que le dispositif optique 10 utilisé lors de l'acquisition de la séquence d'image candidate a acquis la séquence directement à partir de l'individu et non à partir d'une image de celui-ci.

Le procédé peut alors comprendre la mise en oeuvre de l'étape 230 de comparaison des images pour authentifier l'individu.

Si au contraire on ne détecte pas de correspondance entre les paramètres (dans l'exemple qui précède, si l'équation est vérifiée), une fraude est détectée au cours d'une étape 224 et le procédé fournit un résultat négatif d'authentification 202. Facultativement, le procédé peut quand même comprendre la mise en oeuvre de l'étape 230 malgré la détection de la fraude. Une alerte peut être déclenchée par un affichage visuel, par exemple un message d'erreur, ou par un signal sonore.

**Revendications**

1. Procédé de détection de fraude (220) lors d'une authentification biométrique d'un individu comprenant l'acquisition (210), par un dispositif optique (10), d'une séquence d'images candidates comprenant au moins deux images candidates d'un individu sur lesquelles l'individu présente des positions relatives différentes par rapport au dispositif optique, pour comparer ladite séquence avec une séquence d'images de référence comprenant au moins deux images de référence sur lesquelles l'individu présente des positions relatives différentes par rapport au dispositif optique, la séquence d'images de référence ayant été acquise lors d'une étape d'enrôlement (100) préalable par le même dispositif optique (10), des paramètres géométriques du dispositif optique (10) ayant acquis la séquence d'image de référence ayant été estimés lors de l'enrôlement (100), les paramètres géométriques du dispositif optique ayant acquis la séquence d'image de référence comprenant un ratio entre la distance focale du dispositif optique et la taille des pixels d'un capteur (11) du dispositif optique,

le procédé comprenant les étapes consistant à :

- estimer (221), à partir de la séquence d'images candidates, les paramètres géométriques du dispositif optique ayant acquis ladite séquence d'images candidates sur l'individu, les paramètres géométriques du dispositif optique ayant acquis la séquence d'images candidates comprenant le ratio entre la distance focale du dispositif optique et la taille des pixels du capteur (11) du dispositif optique, et
- comparer (222) lesdits paramètres géométriques estimés à partir de la séquence d'images candidates avec les paramètres géométriques du dispositif optique ayant acquis la séquence d'images de référence, lors de l'enrôlement (100) et
- à partir du résultat de la comparaison, déterminer (223, 224) si la séquence d'images candidates a été acquise à partir d'au moins une image pré-enregistrée de l'individu.

2. Procédé de détection de fraude (220) selon la revendication 1, dans lequel, si les paramètres géométriques estimés à partir de la séquence d'images candidates sont différents des paramètres géométriques du dispositif optique ayant acquis la séquence d'image de référence, la séquence d'image candidate est considérée comme ayant été acquise à partir d'une image pré-enregistrée, et le procédé comprend une étape de détection de fraude (223).

3. Procédé de détection de fraude (220) selon l'une des revendications 1 ou 2, dans lequel le dispositif optique (10) comprend un capteur (11) et une optique (12), et les paramètres géométriques d'un dispositif optique comprennent la distance focale de l'optique, la taille des pixels du capteur, et la position de la projection du centre de l'optique sur le capteur.

4. Procédé de détection de fraude (220) selon l'une des revendications précédentes, dans lequel chaque dispositif optique utilisé pour acquérir la séquence d'images candidates et la séquence d'image de référence est modélisé comme une caméra à sténopée telle que la projection d'un point P sur un capteur optique du dispositif optique est fournie par la relation :

$$p = K[Rt]P$$

où K est la matrice des propriétés géométriques intrinsèques du dispositif optique, R es une matrice de rotation et t est un vecteur de translation, et l'estimation des paramètres géométriques du dispositif optique ayant acquis la séquence d'images candidates comprend l'estimation des paramètres de la matrice $K_{eq}$ d'un dispositif optique équivalent ayant acquis lesdites images directement sur l'individu, et la comparaison avec les paramètres de la matrice $K_0$ du dispositif optique ayant acquis la séquence d'image candidate.

5. Système de détection de fraude (1) comprenant un dispositif optique d'acquisition d'images (10) et une unité de traitement (20) comprenant un processeur (21) et une mémoire (22), le système étant **caractérisé en ce qu'**il est adapté pour mettre en oeuvre le procédé selon l'une des revendications qui précèdent.

6. Système de détection de fraude (1) selon la revendication 5, ledit système étant un dispositif électronique personnel de type ordinateur personnel, téléphone mobile ou tablette numérique.

7. Produit programme d'ordinateur, comprenant des instructions de code permettant l'exécution d'un procédé selon l'une des revendications 1 à 4 lorsque le programme est mis en oeuvre par un processeur (21).

8. Procédé d'authentification biométrique d'un individu, comprenant :

   - un enrôlement (100) d'un individu par acquisition, au moyen d'un dispositif optique (10), d'une séquence d'image de référence de l'individu comprenant au moins au moins deux images de référence sur lesquelles l'individu présente des positions relatives différentes par rapport au dispositif optique, l'enrôlement comprenant en outre une estimation de paramètres géométriques du dispositif optique ayant acquis la séquence d'images de référence, les paramètres géométriques comprenant un ratio entre la distance focale du dispositif optique et la taille des pixels d'un capteur (11) du dispositif optique, et
   - une vérification (200) de l'identité d'un individu candidat, ladite vérification comprenant l'acquisition (210), au moyen du même dispositif optique (10) que celui utilisé lors de l'enrôlement, d'une séquence d'images candidates d'un individu comprenant au moins deux images de l'individu sur lesquelles l'individu présente des positions relatives différentes par rapport au dispositif optique,

   le procédé d'authentification étant **caractérisé en ce qu'**il comprend la mise en œuvre du procédé de détection de fraude (220) selon l'une des revendications 1 à 4.

**Patentansprüche**

1. Verfahren zur Betrugserkennung (220) bei einer biometrischen Authentifizierung einer Person, umfassend die Erfassung (210) durch eine optische Einrichtung (10) einer Kandidatenbildfolge, die mindestens zwei Kandidatenbilder einer Person umfasst, auf denen die Person unterschiedliche Relativpositionen in Bezug auf die optische Einrichtung einnimmt, um diese Bildfolge mit einer Referenzbildfolge zu vergleichen, die mindestens zwei Referenzbilder umfasst, auf denen die Person unterschiedliche Relativpositionen in Bezug auf die optische Einrichtung einnimmt, wobei die Referenzbildfolge während eines vorherigen Registrierungsschrittes (100) durch dieselbe optische Einrichtung (10) erfasst wurde,
   wobei geometrische Parameter der optischen Einrichtung (10), die die Referenzbildfolge erfasst hat, bei der Registrierung (100) geschätzt wurden, wobei die geometrischen Parameter der optischen Einrichtung, die die Referenzbildfolge erfasst hat, ein Verhältnis zwischen der Brennweite der optischen Einrichtung und der Pixelgröße eines Sensors (11) der optischen Einrichtung umfassen,
   wobei das Verfahren die folgenden Schritte umfasst:

   - Schätzen (221), ausgehend von der den Kandidatenbildfolge, der geometrischen Parameter der optischen Einrichtung, die diese Kandidatenbildfolge von der Person erfasst hat, wobei die geometrischen Parameter der optischen Einrichtung, die die Kandidatenbildfolge erfasst hat, das Verhältnis zwischen der Brennweite der optischen Einrichtung und der Pixelgröße des Sensors (11) der optischen Einrichtung umfassen, und
   - Vergleichen (222) dieser ausgehend von der Kandidatenbildfolge geschätzten geometrischen Parameter mit den geometrischen Parametern der optischen Einrichtung, die die Referenzbildfolge bei der Registrierung (100) erfasst hat, und
   - ausgehend von dem Ergebnis des Vergleichs Bestimmen (223, 224), ob die Kandidatenbildfolge ausgehend von mindestens einem voraufgezeichneten Bild der Person erfasst wurde.

2. Verfahren zur Betrugserkennung (220) nach Anspruch 1, wobei, wenn sich die ausgehend von der Kandidatenbildfolge geschätzten geometrischen Parameter von den geometrischen Parametern der optischen Einrichtung unterscheiden, die die Referenzbildfolge erfasst hat, die Kandidatenbildfolge als ausgehend von einem voraufgezeichneten Bild erfasst betrachtet wird, und das Verfahren einen Schritt der Betrugserkennung (223) umfasst.

**3.** Verfahren zur Betrugserkennung (220) nach einem der Ansprüche 1 oder 2, wobei die optische Einrichtung (10) einen Sensor (11) und eine Optik (12) umfasst, und die geometrischen Parameter einer optischen Einrichtung die Brennweite der Optik, die Pixelgröße des Sensors, und die Position der Projektion des Mittelpunkts der Optik auf dem Sensor umfassen.

**4.** Verfahren zur Betrugserkennung (220) nach einem der vorstehenden Ansprüche, wobei jede optische Einrichtung, die verwendet wird, um die Kandidatenbildfolge und die Referenzbildfolge zu erfassen, wie eine Lochkamera modelliert ist, sodass sich die Projektion eines Punktes P auf einen optischen Sensor der optischen Einrichtung ergibt aus der Relation:

$$p=K[Rt]P$$

wobei K die Matrix der intrinsischen geometrischen Eigenschaften der optischen Einrichtung, R eine Rotationsmatrix und t ein Translationsvektor ist, und wobei die Schätzung der geometrischen Parameter der optischen Einrichtung, die die Kandidatenbildfolge erfasst hat, die Schätzung der Parameter der Matrix $K_{eq}$ einer äquivalenten optischen Einrichtung, die diese Bilder direkt von der Person erfasst hat, und den Vergleich mit den Parametern der Matrix $K_0$ der optischen Einrichtung umfasst, die die Kandidatenbildfolge erfasst hat.

**5.** Betrugserkennungssystem (1) umfassend eine optische Einrichtung zur Erfassung von Bildern (10), und eine Verarbeitungseinheit (20) mit einem Prozessor (21) und einem Speicher (22), wobei das System **dadurch gekennzeichnet ist, dass** es dafür geeignet ist, das Verfahren nach einem der vorstehenden Ansprüche zu implementieren.

**6.** Betrugserkennungssystem (1) nach Anspruch 5, wobei das System ein persönliches elektronisches Gerät der Art Personal Computer, Mobiltelefon oder Tablet-PC ist.

**7.** Computerprogrammprodukt umfassend Codebefehle, die die Durchführung eines Verfahrens nach einem der Ansprüche 1 bis 4 ermöglichen, wenn das Programm durch einen Prozessor (21) implementiert wird.

**8.** Verfahren zur biometrischen Authentifizierung einer Person, umfassend:

- eine Registrierung (100) einer Person durch Erfassung mittels einer optischen Einrichtung (10) einer Referenzbildfolge der Person, die mindestens zwei Referenzbilder umfasst, auf denen die Person unterschiedliche Relativpositionen in Bezug auf die optische Einrichtung einnimmt, wobei die Registrierung ferner eine Schätzung der geometrischen Parameter der optischen Einrichtung umfasst, die die Referenzbildfolge erfasst hat, wobei die geometrischen Parameter ein Verhältnis zwischen der Brennweite der optischen Einrichtung und der Pixelgröße eines Sensors (11) der optischen Einrichtung umfassen, und
- eine Überprüfung (200) der Identität einer Kandidatenperson, wobei diese Überprüfung die Erfassung (210), mithilfe derselben optischen Einrichtung (10) wie diejenige, die bei der Registrierung verwendet wurde, einer Kandidatenbildfolge einer Person, die mindestens zwei Bilder der Person umfasst, auf denen die Person zwei unterschiedliche Relativpositionen in Bezug auf die optische Einrichtung einnimmt,

wobei das Authentifizierungsverfahren **dadurch gekennzeichnet ist, dass** es die Implementierung des Betrugserkennungsverfahrens (220) nach einem der Ansprüche 1 bis 4 umfasst.

**Claims**

**1.** A method for detecting fraud (220) during biometric authentication of an individual comprising the acquisition (210), by an optical device (10), of a sequence of candidate images comprising at least two candidate images of an individual on which the individual has different relative positions with respect to the optical device, in order to compare said sequence with a reference image sequence comprising at least two reference images on which the individual has different relative positions with respect to the optical device, the reference image sequence having been acquired during a preliminary enrollment step (100) by the same optical device (10), the geometrical parameters of the optical device (10) having acquired the reference image sequence having been estimated during the enrollment (100), the geometrical parameters of the optical device having acquired the reference image sequence comprising a ratio between the focal distance of the optical device and the size of the pixels of a sensor (11) of the optical device, the method comprising the steps of:

- estimating (221), from the sequence of candidate images, geometrical parameters of the optical device having acquired said sequence of candidate images on the individual, the geometrical parameters of the optical device having acquired the sequence of candidate images comprising the ratio between the focal distance of the optical device and the size of the pixels of a sensor (11) of the optical device, and

- comparing (222) said geometrical parameters estimated from the sequence of candidate images with geometrical parameters of the optical device having acquired the reference image sequence, during the enrollment (100), and

- from the result of the comparison, determining (223, 224) whether the candidate image sequence was acquired from at least one pre-recorded image of the individual.

2. The fraud detection method (220) according to claim 1, wherein if the estimated geometrical parameters from the sequence of candidate images are different from the geometrical parameters of the optical device having acquired the reference image sequence, the candidate image sequence is considered as having been acquired from a pre-recorded image, and the method comprises a fraud detection step (223).

3. The fraud detection method (220) according to one of claims 1 or 2, wherein the optical device (10) comprises a sensor (11) and optics (12), and the geometrical parameters of an optical device comprise the focal distance of the optics, the size of the pixels of the sensor, and the position of the projection of the centre of the optics on the sensor.

4. The fraud detection method (220) according to one of preceding claims, wherein each optical device used for acquiring the sequence of candidate images and the reference image sequence is modeled as a pinhole camera such that the projection of a point P on an optical sensor of the optical device is provided by the relationship:

$$p=K[Rt]P$$

wherein K is the matrix of the intrinsic geometrical properties of the optical device, R is a matrix of rotation and t is a translation vector, and the estimation of the geometrical parameters of the optical device having acquired the sequence of candidate images comprises the estimation of the parameters of the matrix $K_{eq}$ of an equivalent optical device having acquired said images directly on the individual, and the comparison with the parameters of the matrix $K_0$ of the optical device having acquired the candidate image sequence.

5. A fraud detection system (1) comprising an optical device for acquiring images (10) and a processing unit (20) comprising a processor (21) and a memory (22), the system being **characterized in that** it is adapted for executing the method according to one of the preceding claims.

6. The fraud detection system (1) according to claim 5, said system being a personal electronic device of the personal computer, mobile telephone or digital tablet type.

7. A computer program product, comprising code instructions for executing a method according to one of claims 1 to 4 when the program is executed by a processor (21).

8. A method for biometric authentication of an individual, comprising:

    - enrolling (100) an individual by acquiring, by means of an optical device (10), a reference image sequence of the individual comprising at least two reference images on which the individual has different relative positions with respect to the optical device, the enrollment further comprising an estimation of geometrical parameters of the optical device having acquired the sequence of reference images, the geometrical parameters comprising a ratio between the focal distance of the optical device and the size of the pixels of a sensor (11) of the optical device, and
    - verifying (200) the identity of a candidate individual, said verification comprising the acquisition (210), by means of the same optical device (10) as the one used during enrollment, of a sequence of candidate images of an individual comprising at least two images of the individual on which the individual has different relative positions with respect to the optical device,

    the authentication method being **characterized in that** it comprises execution of the fraud detection method (220) according to one of claims 1 to 4.

# FIG. 1

100 — Enrôlement - Acquisition séquence de référence

**Vérification**

210 — Acquisition séquence candidate

**Détection de fraude**

221 — Estimation paramètres caméra
de la séquence candidate

200 — 220 —

222 — Comparaison paramètres caméra
enrôlement / caméra vérification

223 — Pas de fraude          Fraude détectée — 224

230 — Comparaison séquence

201 — Succès de la vérification          Echec de la vérification — 202

# FIG. 2

# FIG. 3

## FIG. 4a

## FIG. 4b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014289834 A1
- US 2014333414 A1

**Littérature non-brevet citée dans la description**

- Video-Based Face Spoofing Détection through Visual Rhythm Analysis. **ALLAN DA SILVA PINTO et al.** GRAPHICS, PATTERNS AND IMAGES (SIBGRAPI), 2012 25TH SIBGRAPI CONFERENCE ON. IEEE, 22 Août 2012, 221-228
- Face récognition using eigenfaces. **TURK, M. ; PENTLAND, A. P.** Computer Vision and Pattern Recognition, 1991. Proceedings CVPR'91., IEEE Computer Society Conference on. IEEE, 1991, 586-591
- **LI, HONGDONG.** *A simple solution to the Six-point Two-view Focal-length Problem*
- Bundle adjustment-a modem synthesis. **TRIGGS, B. ; MCLAUCHLAN, P. F. ; HARTLEY, R. I. ; FITZGIBBON, A. W.** Vision algorithms: theory and practice. Springer, 2000, 298-372
- **TSAI, R. Y.** A versatile camera calibration technique for high-accuracy 3D machine vision metrology using off-the-shelf TV cameras and lenses. *Robotics and Automation, IEEE Journal of,* 1987, vol. 3 (4), 323-344